# EUROPÄISCHE PATENTSCHRIFT

(11) **EP 2 418 160 B1**
(45) Veröffentlichungstag und Bekanntmachung des Hinweises auf die Patenterteilung: **31.07.2013**
(21) Anmeldenummer: 11165793.8
(22) Anmeldetag: 12.05.2011
(51) Int. Cl.: B65G 19/02, B65G 47/61

(54) **Förderanlage mit Tragetaschen für Fördergut**
Conveyor assembly with holder bags for conveyed goods
Installation de transport dotée de sacs de support pour des biens de transport

(30) Priorität: 10.08.2010 DE 102010033905
(43) Veröffentlichungstag der Anmeldung: 15.02.2012
(73) Patentinhaber: Dürkopp Fördertechnik GmbH, 33719 Bielefeld (DE)
(72) Erfinder: Wend, Michael, 33619, Bielefeld (DE); Janzen, Paul, 33619, Bielefeld (DE)
(74) Vertreter: Rau, Schneck & Hübner

(56) Entgegenhaltungen:
- EP-A2- 2 196 415

## Beschreibung

Die Erfindung betrifft eine Förderanlage mit Tragetaschen für Fördergut nach dem Oberbegriff des Anspruchs 1.

Aus der DE 10 2008 026 720 A1 ist eine Förderanlage bekannt, bei der Tragetaschen mittels Trage-Haken in Mitnehmer einer Förderanlage eingehängt werden. Die Tragetaschen weisen eine Hinterwand und eine Vorderwand mit einem Boden auf, der mittels einer lösbaren Kupplung an der Hinterwand angebracht ist. Am oberen Rand sind die Hinterwand und die Vorderwand mittels eines rechteckigen Tragrahmens miteinander verbunden, der seitlich vorkragende Vorsprünge aufweist. An einer Beladestation laufen diese Vorsprünge auf eine Schiene auf, so dass der Tragrahmen hochgeschwenkt wird, wodurch eine Beschickungsöffnung geöffnet wird. Zum Entladen wird die untere Kupplung geöffnet, so dass ein Fördergut nach unten herausfallen kann. Die Tragetaschen sind in der Förderanlage dicht aufeinander angeordnet, und zwar mit ihrer größeren Breite quer zur Förderrichtung. Die Beladung erfolgt von der Seite her zwischen die Hinterwand und die Vorderwand.

Aus der DE 10 2004 018 569 A1 ist eine Förderanlage mit Tragetaschen bekannt. Die Tragetaschen bestehen aus einer Hinterwand, einer Vorderwand und einem Boden. Die oberen Ränder sind mittels eines rechteckigen Tragerahmens miteinander verbunden. Zum Öffnen einer durch den Tragrahmen begrenzten Beschickungsöffnung sind am Tragrahmen angebrachte Vorsprünge vorgesehen, die an einer Beschickungsstation über eine Schiene geführt werden, die den Tragrahmen in eine angenähert waagerechte Position bringt, so dass die Beschickungsöffnung geöffnet wird. Auch bei dieser Förderanlage verbleiben die Tragetaschen ständig in ihrer Position, in der die größere Breite quer zur Förderrichtung verläuft.

Aus der DE 32 06 829 A1 ist eine Förderanlage zum Transport eines Wäschesacks bekannt, der einen oberen, etwa quadratischen Tragrahmen aufweist, an dem ein an seinem unteren Ende verschließbarer Taschenbeutel angehängt ist. Der ständig in einer waagerechten geöffneten Position befindliche Tragrahmen, der eine Beschickungsöffnung umgrenzt, kann um eine vertikale Achse in eine für eine Beschickung optimale Lage von Hand gedreht werden.

Aus der EP 2196415 A2 ist eine Förderanlage mit Tragetaschen für Fördergut gemäß dem Oberbegriff des Anspruchs 1 bekannt.

Der Erfindung liegt die Aufgabe zugrunde, eine Förderanlage mit Tragetaschen für Fördergut zu schaffen, die einerseits eine platzsparende Anordnung der Tragetaschen mit kleinstmöglichem Abstand zueinander während der Förderung und andererseits eine ungehinderte Handhabung beim Be- und Entladen einer Tragetasche mit Fördergut ermöglicht.

Diese Aufgabe wird durch eine Förderanlage mit den Merkmalen des Anspruches 1 gelöst. Die erfindungsgemäße Förderanlage hat eine größtmögliche Aufnahmekapazität durch eine platzsparende Positionierung der Fördergut aufnehmenden Tragetaschen. Andererseits wird die Beschickung und Entladung der Tragetaschen mit Fördergut auf sehr einfache Weise ermöglicht. Das Drehen der Taschen aus einer Förder-Position in eine Be- und Entlade-Position erfolgt auf sehr einfache Weise, wobei gleichzeitig die während des Förderns geschlossene Beschickungsöffnung geöffnet wird.

Die Ansprüche 2, 3 und 4 geben Einzelheiten der erfindungsgemäßen Lösung wieder. Aus den weiteren Unteransprüchen ergeben sich weitere vorteilhafte Ausgestaltungen.

Weitere Merkmale, Vorteile und Einzelheiten der Erfindung ergeben sich aus der nachfolgenden Beschreibung eines Ausführungsbeispiels anhand der Zeichnung. Es zeigt:
- Fig. 1: eine Tragetasche der Förderanlage mit geschlossener Beschickungsöffnung in perspektivischer Ansicht,
- Fig. 2: eine Seitenansicht der Tragetasche in einer Ansicht gemäß dem Sichtpfeil II in Fig. 1,
- Fig. 3: eine perspektivische Ansicht auf den oberen Teil der Tragetasche mit geöffnetem Beschickungsfenster in einer Ansicht gemäß dem Sichtpfeil III in Fig. 1 in gegenüber Fig. 1 vergrößertem Maßstab,
- Fig. 4: eine Fig. 2 entsprechende Seitenansicht der Tragetasche mit geöffneter Beschickungsöffnung,
- Fig. 5: eine perspektivische Darstellung entsprechend dem Sichtpfeil V in Fig. 3,
- Fig. 6: eine gegenüber Fig. 2 vergrößerte Darstellung einer Aufhängung der Tragetaschen gemäß der Einzelheit Z in Fig. 2,
- Fig. 7: eine Ansicht des in Fig. 6 gezeigten Bereichs in Richtung des Sichtpfeils VII in Fig. 6,
- Fig. 8: eine der Fig. 7 entsprechende Ansicht in einer Abwandlung,
- Fig. 9: eine Vorderansicht einer Förderanlage mit eingehängten Tragetaschen,
- Fig. 10: eine Fig. 6 entsprechende Aufhängung der Tragetaschen in einer gegenüber der Darstellung in Fig. 6 um 90° gedrehten Darstellung,
- Fig. 11: eine Seitenansicht der Förderanlage entsprechend dem Sichtpfeil XI in Fig. 9,
- Fig. 12: eine Draufsicht auf die Förderanlage entsprechend dem Sichtpfeil XII in Fig. 9,
- Fig. 13: eine Seitenansicht der Förderanlage in einer gegenüber Fig. 11 leicht abgewandelten Form, und
- Fig. 14: eine Draufsicht auf die Förderanlage entsprechend dem Sichtpfeil XIV in Fig. 13.

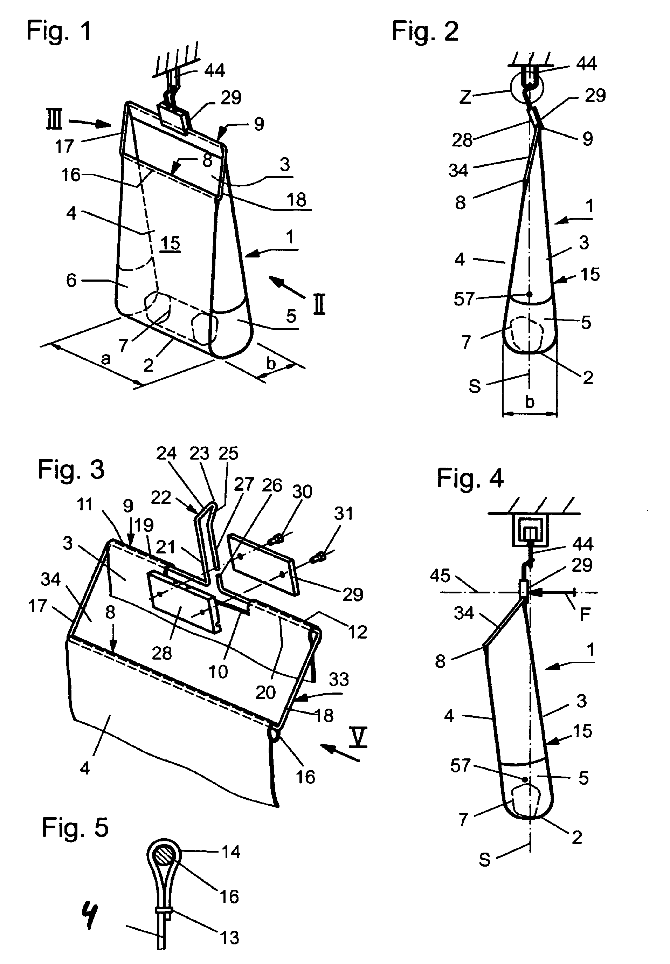

Eine Tragetasche 1 weist einen im Querschnitt halbkreisförmigen Boden 2 und sich davon nach oben erstreckende Wände, nämlich eine Hinterwand 3 und eine Vorderwand 4, auf. Die Hinterwand 3 erstreckt sich weiter nach oben als die Vorderwand 4. Im Bereich des Bodens 2 sind die Hinterwand 3 und die Vorderwand 4 jeweils mittels einer Seitenwand 5 bzw. 6 miteinander verbunden. Die Hinterwand 3 und die Vorderwand 4 weisen eine Breite a auf. Die Seitenwände 5 bzw. 6 weisen eine Breite b auf. Die Wände 3, 4, 5, 6 sind im Querschnitt rechtwinklig zueinander angeordnet. Der Boden 2 und die Wände 3 bis 6 bilden eine nach oben offene Tasche, in der ein Fördergut 7, beispielsweise ein Kleidungsstück, aufgenommen werden kann. Die Vorderwand 4 weist einen oberen, durch einen Saum 14 gebildeten Rand 8 auf. Die Hinterwand 3 weist einen durch Säume 11,12 gebildeten oberen Rand 9 auf, der durch einen mittigen Ausschnitt 10 unterbrochen ist. Die Säume 11, 12, 14 sind jeweils durch eine Naht 13 fixiert, wie Figur 5 für den Saum 14 entnehmbar ist. Der durch den Boden 2, die Hinterwand 3, die Vorderwand 4 und die Seitenwände 5, 6 gebildete Taschenbeutel 15 besteht aus biegeschlaffem Material, beispielsweise einem Gewebe oder einer Kunststofffolie.

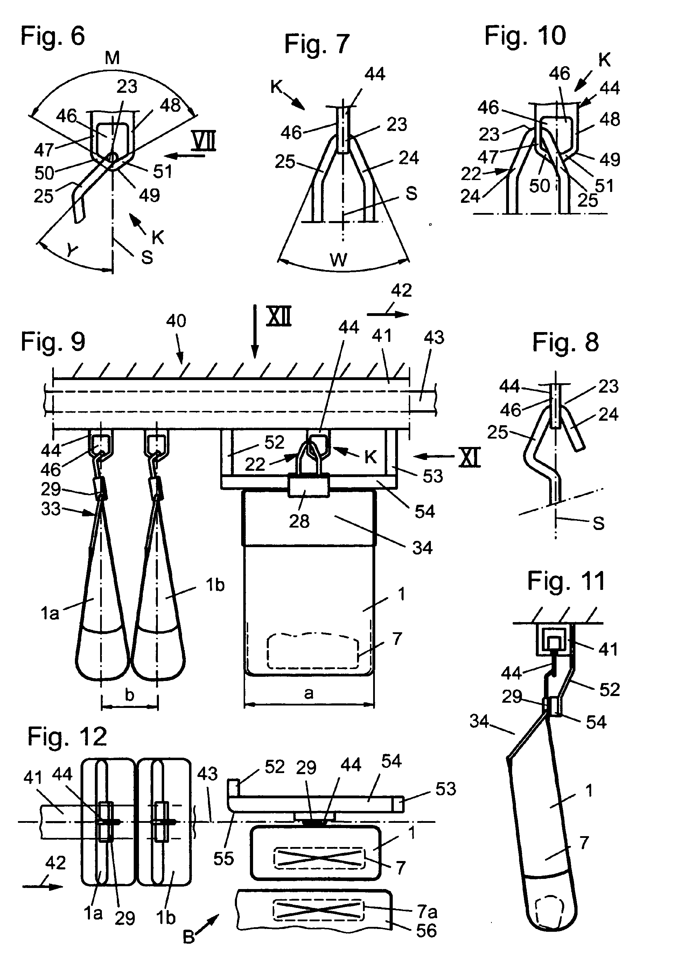

Der Taschenbeutel 15 weist an seinem oberen Ende einen Tragrahmen 33 auf, durch den eine Beschickungsöffnung 34 begrenzt wird. Dieser Tragrahmen 33 besteht aus einer einstückigen runden Stange aus Stahl. Diese Stange ist - wie insbesondere Figur 3 erkennen lässt - zu einem im Wesentlichen rechteckigen Rahmen gebogen. Sie weist eine im Saum 14 der Vorderwand 4 angeordnete Querstange 16, zwei von deren Enden rechtwinklig abgebogene, zur Hinterwand 3 führende Verbindungsstangen 17, 18 und zwei im Saum 9 befindliche, bis zum Ausschnitt 10 führende Querstangen 19, 20 auf. Die Querstangen 19, 20 verlaufen parallel zur Querstange 16. Die Verbindungsstangen 17, 18 verlaufen ebenfalls parallel zueinander. Von der Querstange 19 ist ein Stangenabschnitt 21 nach oben abgebogen. In seinem oberen Bereich ist der Stangenabschnitt 21 mit einem abgewinkelten Abschnitt 22 versehen, der mit einer vertikalen Schwerkraftlinie S einen Winkel Y einschließt, für den gilt 25 ° ≤ Y ≤ 65 °, wobei vorzugsweise gilt Y = 45 °, wie insbesondere Figur 6 entnehmbar ist. Dieser abgewinkelte Abschnitt 22 wird durch zwei Schenkel 24, 25 gebildet, die die Form eines auf den Kopf gestellten V aufweisen, wie Figur 7 entnehmbar ist. Die Schenkel 24, 25 schließen einen Winkel W ein, für den gilt 30 ° ≤ W ≤ 120 ° und vorzugsweise W = 40 °. Die Spitze der beiden Schenkel 24, 25 bildet eine Aufhängestelle 23. Von dem Schenkel 25 ragt ein Stangenabschnitt 27 nach unten, der parallel zum Stangenabschnitt 21 verläuft. Von der Querstange 20 ist ein kurzer Stangenabschnitt 26 nach oben abgebogen, der fluchtend mit dem Stangenabschnitt 27 verläuft. Zwischen den beiden Stangenabschnitten 26, 27 ist - wie Figur 3 erkennen lässt - ein kleiner offener Spalt.

Die einander benachbarten Bereiche der Querstangen 19, 20 und der Stangenabschnitte 26, 27 und 21 sind in Fig. 3 in nur angedeuteten angepassten Ausnehmungen eines aus Kunststoff bestehenden Blocks 28 aufgenommen und hier mittels eines plattenförmigen Druckstücks 29 verspannt, das mit Schrauben 30, 31 in Form von Senkkopfschrauben an dem Block 28 befestigt ist. Die Querstange 16, die Verbindungsstangen 17, 18, die Querstangen 19, 20 und die benachbarten Teile der Stangenabschnitte 21, 26, 27 und der Block 28 mit dem Druckstück 29 bilden den bereits erwähnten Tragrahmen 33, der die Beschickungsöffnung 34 begrenzt. Der Stangenabschnitt 21 und der abgewinkelte Abschnitt 22 bilden eine Zugstange. Der Taschenbeutel 15 mit dem Tragrahmen 33 bildet die Tragetasche 1.

Eine Förderanlage 40 zum Transport der Tragtaschen 1 weist eine ortsfeste Förderschiene 41 mit einem in einer Förderrichtung 42 bewegbaren Zugstrang 43 auf, der in der Förderschiene 41 verschiebbar geführte Mitnehmer 44 mitnimmt. Der Zugstrang 43 wird von einem nicht dargestellten Motor angetrieben. Die Mitnehmer 44 sind in der Förderschiene 41 in Förderrichtung 42 verschiebbar, sind aber horizontal und quer hierzu entsprechend der in Figur 4 dargestellten Wirkungslinie 45 nicht bewegbar, das heißt sie können ihre in Figur 4 dargestellte Position nicht verändern. Die Mitnehmer 44 sind weiterhin nicht um eine vertikale Achse drehbar.

Die Mitnehmer 44 weisen jeweils eine sich in Förderrichtung 42 erstreckende und quer zur Förderrichtung 42 offene fensterförmige Ausnehmung 46 auf, die von zwei vertikal verlaufenden Schenkeln 47, 48 und einem diese nach unten verbindenden V-förmigen Steg 49 begrenzt wird, dessen Stegschenkel 50, 51 einen Winkel M einschließen, für den gilt 45 ° ≤ M ≤ 140 ° und vorzugsweise M = 100 °.

Die Tragetasche 1 in der geschilderten Ausgestaltung muss gemäß Figur 7 an dem Mitnehmer 44 befestigt werden, bevor der Block 28 mit dem Druckstück 29 verschraubt wird, da der Stangenabschnitt 27 durch die Ausnehmung 46 eingeführt werden muss, damit die Aufhängestelle 23 im V-förmigen Stück 49 hängt. Wenn dagegen entsprechend der Darstellung in Figur 8 sich an den Schenkel 25 kein Stangenabschnitt 27 anschließt, dann kann der Schenkel 25 in die Ausnehmung 46 eingehängt werden. Die am Stangenabschnitt 21 angebrachte Aufhängestelle 23, die durch die Schenkel 24, 25 begrenzt wird. Der abgewinkelte Abschnitt 22 einerseits und die die Ausnehmung 46 begrenzenden Stegschenkel 50, 51 andererseits bilden eine Kupplung K zwischen dem Tragrahmen 33 und dem Mitnehmer 44, wie Figuren 6, 7, 8 und 10 entnehmbar ist.

Oberhalb einer Beladestation B ist eine Kufe 54 unterhalb und parallel zur Förderschiene 41 vorgesehen. Sie ist hierzu mittels zweier Halte-Stangen 52, 53 an der Förderschiene 41 angebracht. Die Kufe 54 ist an ihrem der Förderrichtung 42 entgegengesetzten Ende mit einem abgerundeten Auflauf-Abschnitt 55 versehen, wie Figur 12 entnehmbar ist. Die Kufe 54 ist derart angeordnet, dass sie mit dem Druckstück 29 der Tragetasche 1 auf einer Höhe ist, so dass das Druckstück 29 einer Tragetasche 1 auf sie auflaufen kann und durch sie ausgelenkt wird.

Die Arbeitsweise der Förderanlage 40 ist wie folgt:

Im Betrieb der Förderanlage 40 erfolgt ein Fördern von beispielsweise leeren Tragetaschen 1a, 1b in Förderrichtung 42, wie es in Figur 9 dargestellt ist. Hierbei werden die Tragetaschen 1a, 1b im Abstand ihrer Breite b dicht nebeneinander gefördert, d. h. sie hängen mit ihrer größeren Breite a quer zur Förderrichtung 42. Die Aufhängestelle 23 befindet sich in ihrer tiefsten Stellung im Steg 49 des Mitnehmers 44. Diese platzsparende Anordnung ermöglicht eine optimale Ausnutzung der Förderanlage 40 mit einer größtmöglichen Aufnahmekapazität von Fördergut 7.

Die Tragetaschen 1 erreichen die Beladestation B, die einen ortsfesten Tisch 56 aufweist, auf dem Fördergut 7a gelagert wird. Mit dem Auflaufen des Druckstücks 29 einer Tragetasche 1 auf die Kufe 54 wird dieses Druckstück um 90 ° gedreht, so dass die Tragetasche mit ihrer größeren Breite a in eine zur Kufe 54 und damit der Förderrichtung 42 parallele Lage gelangt, wie es in den Figuren 9 und 12 dargestellt ist. Durch die Drehung des Druckstücks 29 um 90 ° um eine im Wesentlichen vertikale Achse wird auch die Aufhängestelle 23 um 90 ° gedreht. Der Schenkel 25 des abgewinkelten Abschnitts 22 gleitet auf dem Stegschenkel 51 des V-förmgen Steges 47, wobei sich die Aufhängestelle 23 zuerst am Stegschenkel 50 und dann am Schenkel 47 abstützt. Durch die Schrägstellung der Schenkel 24, 25 und der Stegschenkel 50, 51 gleitet der Schenkel 25 auf dem undrehbar in der Förderschiene 41 geführten Mitnehmer 44 wie bei einer Schraubenbewegung nach oben, wodurch naturgemäß die gesamte Tragetasche 1 angehoben wird.

Die Kufe 54 ist derart gegenüber der normalen Hängelage der Tragetasche 1 in Richtung der Wirkungslinie 45 versetzt angeordnet, dass auf das Druckstück 29 beim Auflaufen auf die Kufe 54 und dem damit verbundenen Drehen des Druckstücks 29 samt Tragetasche 1 eine Kraft F in Richtung zur Beschickungsöffnung 34 der Tragetasche 1 auf den Tragrahmen 33 ausgeübt wird, wie es beispielsweise in den Figuren 4 und 11 dargestellt ist. Dadurch wird der Tragrahmen 33 verschwenkt, so dass die Beschickungsöffnung 34 geöffnet wird. Sie wird also aus ihrer entsprechend den Figuren 1, 2 und 9 weitgehend geschlossenen Position in eine geöffnete Position nach oben verschwenkt. Der Schwerpunkt 57 der Tragetasche 1 wird also aus der durch die Aufhängestelle 23 gehenden Schwerkraftlinie S herausgeschwenkt.

An der Beladestation B kann in eine leere Tragetasche 1a bzw. 1b ein Fördergut 7a eingeladen oder hieraus entnommen werden. Beim Weitertransport einer beladenen oder entladenen Tragetasche 1 kommt deren Druckstück 29 außer Eingriff mit der Kufe 54. Hierdurch bedingt schließt sich die Beschickungsöffnung 34 wieder, da der Schwerpunkt 57 der Tragetasche 1 in die vertikale Schwerkraftlinie S gelangt, die durch die Aufhängestelle 23 geht. Außerdem sinkt die Aufhängestelle 23 aus ihrer angehobenen instabilen Position im Mitnehmer 44 aufgrund der Schwerkraft wieder nach unten, bis die tiefste Stelle der Aufhängestelle 23 im V-förmigen Steg 49 des Mitnehmers erreicht ist. Hierbei erfolgt eine der zuvor geschilderten Schwenkbewegung entgegengesetzte Schwenkbewegung um 90 ° wieder in eine Position, in der die Tragetasche 1 quer zur Förderrichtung 42 hängt. Das Verschwenken der Tragetasche 1 aus der Beladestellung in die Förderstellung erfolgt also selbsttätig nur durch Schwerkraft.

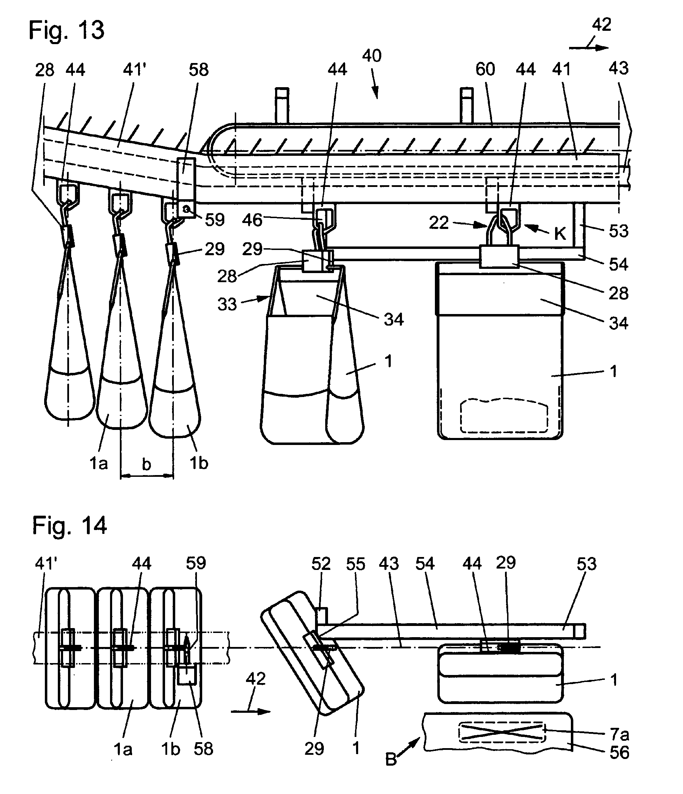

Das Ausführungsbeispiel nach den Fig. 13 und 14 unterscheidet sich von dem nach den Fig. 9 und 12 durch die Art der Vereinzelung von an Mitnehmern 44 hängenden Tragetaschen 1 vor einer Beladestation B. Die Förderschiene weist - bezogen auf die Förderrichtung 42 - vor der Beladestation B einen geneigten Förderschienen-Abschnitt 41' auf, auf dem die Mitnehmer 44 mit Tragetaschen 1 aufgrund der Schwerkraft in Richtung zur Beladestation B herablaufen. Sie werden vor der Beladestation B mittels einer Halte-Vorrichtung 58 angehalten, die einen mittels eines Elektromagneten aus dem Weg des jeweiligen Mitnehmers 44 herausziehbaren HalteStift 59 aufweist. Jedes Mal wenn durch Zurückziehen des Halte-Stiftes 59 aus der Förderschiene 41' ein Mitnehmer 44 mit der Tragetasche 1 freigegeben wird, läuft dieser in die waagerechte Förderschiene 41 ein und wird dort von dem Zugstrang 43 der endlos umlaufend angetriebenen Förderkette 60 erfasst und in angepasster Geschwindigkeit durch die Beladestation B transportiert. In den Fig. 13 und 14 ist auch der Augenblick dargestellt, in dem das Druckstück 29 einer Tragetasche 1 auf die Kufe 54 aufläuft und hierbei unter Drehung um 90° angehoben wird.

## Patentansprüche

1. Förderanlage mit Tragetaschen (1, 1a, 1b) für Fördergut (7, 7a), insbesondere Kleidungsstücke,
- mit einer ortsfesten Förderschiene (41) mit in einer Förderrichtung (42) bewegbaren Mitnehmern (44) zur Aufnahme je einer Tragetasche (1, 1a, 1b),
- - wobei jede Tragetasche (1, 1a, 1b) je einen Taschenbeutel (15) zur Aufnahme von Fördergut (7, 7a) aufweist,
- - wobei jeder Taschenbeutel (15) einen Boden (2), eine Vorderwand (4) mit einer Breite (a) und eine Hinterwand (3) mit einer Breite (a) aufweist und
- - wobei jeder Taschenbeutel (15) einen Tragrahmen (33) aufweist,
- - - der eine obere Beschickungsöffnung (34) des Taschenbeutels (15) umgrenzt,
- - - der an einem oberen Ende eine Aufhängestelle (23) zum Einhängen in einen Mitnehmer (44) aufweist, und
- - - der ein sich parallel zur Vorderwand (4) und zur Hinterwand (3) erstreckendes Druckstück (29) aufweist,
**dadurch gekennzeichnet,**
- **dass** jeder Taschenbeutel - bezogen auf die Breite (a) der Vorderwand (4) und der Hinterwand (3) - schmale Seitenwände (5, 6) mit einer Breite (b) aufweist,
- **dass** eine Beladestation (B) vorgesehen ist, die eine unterhalb und parallel zu der Förderschiene (41) angeordnete ortsfeste Kufe (54) aufweist, und
- **dass** eine zwischen einem Mitnehmer (44) und dem von ihm getragenen Tragrahmen (33) ausgebildete Kupplung (K), vorgesehen ist,
- - die in einer von der Kufe (54) freien Position des Druckstücks (29) eine erste Drehlage der Tragetasche (1, 1a, 1b) relativ zu dem Mitnehmer (44) einnimmt, in der die Beschickungsöffnung (34) der Tragetasche (1, 1a, 1b) eine Stellung quer zur Förderrichtung (42) einnimmt, und
- - die bei Anlage des Druckstücks (29) an der Kufe (54) eine zweite Drehlage der Tragetasche (1, 1a, 1b) relativ zu dem Mitnehmer (44) einnimmt, in der die Beschickungsöffnung (34) der Tragetasche (1, 1a, 1b) sich parallel zur Förderrichtung (42) befindet.

2. Förderanlage nach Anspruch 1, **dadurch gekennzeichnet,**
**dass** die Kupplung (k) schraubenartig wirkend ausgebildet ist, wobei die Tragetasche (1) nach einer Drehung aus der ersten Drehlage in die zweite Drehlage angehoben ist.

3. Förderanlage nach Anspruch 1 oder 2, **dadurch gekennzeichnet,**
- **dass** jeder Mitnehmer (44) eine Ausnehmung (46) aufweist, die durch in einer vertikalen und sich in Förderrichtung (42) erstreckenden Ebene nach unten durch einen V-förmig ausgebildeten Steg (49) mit Stegschenkeln (50, 51) begrenzt wird, wobei die Stegschenkel (50, 51) zwischen sich einen Winkel Einschließen,
- **dass** die Aufhängestelle (23) des Tragrahmens (33) an einer Spitze von zwei in Form eines auf den Kopf gestellten V und zueinander parallel durch die Aufhängestelle (23) in der ersten Drehlage gehenden und in einer zu einer Schwerkraftlinie S um einen Winkel (Y) geneigten Ebene verlaufenden Schenkeln (24, 25) des Tragrahmens (33) ausgebildet sind, die zwischen sich einen Winkel W einschließen, und
- **dass** die Schenkel (24, 25) und der Steg (49) ineinander greifen.

4. Förderanlage nach einem der Ansprüche 1 bis 3, **dadurch gekennzeichnet,**
**dass** die Hinterwand (3) sich weiter nach oben erstreckt als die Vorderwand (4),
**dass** Querstangen (16, 19, 20) des Tragrahmens (33) an oberen Rändern der Hinterwand (3) und der Vorderwand (4) angebracht sind, und
**dass** in der ersten Drehlage der Kupplung (K) die der Vorderwand (4) zugeordnete Querstange (16) sich unterhalb der der Hinterwand (3) zugeordneten Querstange (19, 20) befindet.

5. Förderanlage nach Anspruch 4, **dadurch gekennzeichnet,**
**dass** das Druckstück (29) fest mit der die Hinterwand (3) tragenden Querstange (19, 20) verbunden ist, wobei in der zweiten Drehlage die mit der Vorderwand (4) verbundene Querstange (16) gegenüber der Position in der ersten Drehlage nach oben geschwenkt ist.

6. Förderanlage nach einem der Ansprüche 1 bis 4, **dadurch gekennzeichnet,**
**dass** der Tragrahmen (33) mit der Aufhängestelle (23) einteilig aus einer runden Stange gebildet ist.

7. Förderanlage nach einem der Ansprüche 1 bis 6, **dadurch gekennzeichnet,**
**dass** die Ränder (8, 9) der Vorderwand (4) und der Hinterwand (3) als Säume (14, 11, 12) ausgebildet sind, die die Querstangen (16, 19, 20) aufnehmen.

8. Förderanlage nach einem der Ansprüche 1 bis 7, **dadurch gekennzeichnet,**
**dass** die Vorderwand (4), der Boden (2) und die Hinterwand (3) einteilig aus Gewebe oder Kunststofffolie gebildet sind.

9. Förderanlage nach einem der Ansprüche 1 bis 8, **dadurch gekennzeichnet,**
**dass** für den Winkel M gilt: 45° ≤ M ≤ 140°.

10. Förderanlage nach Anspruch 9, **dadurch gekennzeichnet,**
**dass** für den Winkel M gilt: M = 100°.

11. Förderanlage nach einem der Ansprüche 1 bis 10, **dadurch gekennzeichnet,**
**dass** für den Winkel Y gilt: 25° ≤ Y ≤ 65°.

12. Förderanlage nach Anspruch 11, **dadurch gekennzeichnet,**
**dass** für den Winkel Y gilt: Y = 45°.

13. Förderanlage nach einem der Ansprüche 1 bis 12, **dadurch gekennzeichnet,**
**dass** für den Winkel W gilt: 30° ≤ W ≤ 120°.

14. Förderanlage nach Anspruch 13, **dadurch gekennzeichnet,**
**dass** für den Winkel W gilt: W = 40°.

## Claims

1. Conveyor installation comprising carrier bags (1, 1a, 1b) for material (7, 7a) to be transported, in particular pieces of clothing, the conveyor installation comprising
- a stationary transport rail (41) comprising carrier dogs (44) for receiving in each case one carrier bag (1, 1a, 1b), the carrier dogs (44) being movable in a transport direction (42),
- - wherein each carrier bag (1, 1a, 1b) comprises in each case one sack (15) for receiving material (7, 7a) to be transported;
- - wherein each sack (15) comprises a bottom (2), a front wall (4) having a width (a) and a rear wall (3) having a width (a) and;
- - wherein each sack (15) comprises a support frame (33) which
- -- encloses an upper loading opening (34) of the sack (15);
- -- comprises a suspension point (23) at an upper end, the suspension point (23) being adapted to be inserted into a carrier dog (44); and
- -- comprises a pressure piece (29) which is parallel to the front wall (4) and to the rear wall (3);
**characterized in**
- **that** each sack - relative to the width (a) of the front wall (4) and of the rear wall (3) - comprises narrow side walls (5, 6) having a width (b);
- **that** a loading station (B) is provided, which comprises a sliding surface (54) which is arranged below and parallel to the transport rail (41); and
- **that** a coupling (K) formed between a carrier dog (44) and the support frame (33) carried by the carrier dog (44) is provided, which coupling (K)
- - in a position in which the pressure piece (29) is disengaged from the sliding surface (54), takes up a first rotational position of the carrier bag (1, 1a, 1b) relative to the carrier dog (44) in which rotational position the loading opening (34) of the carrier bag (1, 1a, 1b) takes up a position which is transverse to the transport direction (42); and
- - when the pressure piece (29) is in contact with the sliding surface (54), takes up a second rotational position of the carrier bag (1, 1a, 1b) relative to the carrier dog (44) in which rotational position the loading opening (34) of the carrier bag (1, 1a, 1b) is parallel to the transport direction (42).

2. Conveyor installation according to claim 1, **characterized in that** the coupling (K) is designed in such a way as to act in the manner of a screw, wherein the carrier bag (1) is lifted up after a rotation from the first rotational position to the second rotational position.

3. Conveyor installation according to claim 1 or 2, **characterized in**
- **that** each carrier dog (44) comprises a recess (46) which, in a vertical plane extending in the transport direction (42), is downwardly bounded by a V-shaped web (49) comprising web legs (50, 51), wherein the web legs (50, 51) form an angle M between each other;
- **that** the suspension point (23) of the support frame (33) is formed at a tip of two legs (24, 25) of the support frame (33) which are in the shape of an upside down V while forming an angle W between each other, wherein the legs (24, 25) are parallel to each other when passing through the suspension point (23) in the first rotational position and extend in a plane which is inclined through an angle (Y) relative to a line of gravity S; and
- **that** the legs (24, 25) and the web (49) are in engagement with each other.

4. Conveyor installation according to one of claims 1 to 3, **characterized in**
**that** the rear wall (3) extends beyond the upper boundary of the front wall (4);
**that** crossbars (16, 19, 20) of the support frame (33) are mounted to upper edges of the rear wall (3) and of the front wall (4); and
**that** in the first rotational position of the coupling (K), the crossbar (16) assigned to the front wall (4) is below the crossbar (19, 20) assigned to the rear wall (3).

5. Conveyor installation according to claim 4, **characterized in that** the pressure piece (29) is rigidly connected to the crossbar (19, 20) which carries the rear wall (3), wherein in the second rotational position, the crossbar (16) connected to the front wall (4) is pivoted upwards relative to the position in the first rotational position.

6. Conveyor installation according to one of claims 1 to 4, **characterized in**
**that** the support frame (33) is formed in one piece with the suspension point (23) from a round bar.

7. Conveyor installation according to one of claims 1 to 6, **characterized in**
**that** the edges (8, 9) of the front wall (4) and of the rear wall (3) are hems (14, 11, 12) which receive the crossbars (16, 19, 20).

8. Conveyor installation according to one of claims 1 to 7, **characterized in**
**that** the front wall (4), the bottom (2) and the rear wall (3) are formed in one piece of fabric or plastic film.

9. Conveyor installation according to one of claims 1 to 8, **characterized in**
**that** to the angle M applies 45° ≤ M ≤ 140°.

10. Conveyor installation according to claim 9, **characterized in that** to the angle M applies M = 100°.

11. Conveyor installation according to one of claims 1 to 10, **characterized in**
**that** to the angle Y applies 25° ≤ Y ≤ 65°.

12. Conveyor installation according to claim 11, **characterized in that** to the angle Y applies Y = 45°.

13. Conveyor installation according to one of claims 1 to 12, **characterized in**
**that** to the angle W applies 30° ≤ W ≤ 120°.

14. Conveyor installation according to claim 13, **characterized in that** to the angle W applies W = 40°.

## Revendications

1. Installation de transport dotée de sacs de transport (1, 1a, 1b) pour des biens de transport (7, 7a), en particulier des vêtements,
- comprenant un rail de transport (41) en position fixe comportant des éléments d'entraînement (44) pouvant être déplacés dans une direction de transport (42) pour, chaque fois, l'admission d'un sac de transport (1, 1a, 1b),
- - chaque sac de transport (1, 1a, 1b) présentant une poche (15) pour l'admission de biens de transport (7 , 7a),
- - chaque poche (15) présentant un fond (2), une face avant (4) d'une largeur (a) et une face arrière (3) d'une largeur (a), et
- - chaque poche (15) présentant un cadre support (33),
- -- qui délimite une ouverture d'approvisionnement supérieure (34) de la poche (15)
- -- qui présente à une des extrémités supérieures un emplacement d'accrochage (23) pour l'accrochage dans un élément d'entraînement (44), et
- -- qui présente un élément d'appui (29) s'étendant parallèlement à la face avant (4) et à la face arrière (3),
**caractérisée en ce**
- **que** chaque poche présente des faces latérales (5, 6) d'une largeur (b), étroite par rapport à la largeur (a) de la face avant (4) et de la face arrière (3),
- **qu'**un poste de chargement (B) est prévu, qui présente un patin (54) en position fixe disposé en dessous et parallèlement au rail de transport (41), et
- **qu'**un attelage (K), formé entre un élément d'entraînement (44) et le cadre support (33) qu'il supporte, est prévu,
- - qui adopte un premier emplacement de rotation du sac de transport (1, 1a, 1b) par rapport à l'élément d'entraînement (44) dans une position libre de la pièce d'appui (29) par rapport au patin (54), dans laquelle l'ouverture d'approvisionnement (34) du sac de transport (1, 1a, 1b) adopte une position perpendiculaire à la direction de transport (42), et
- - qui adopte une deuxième position de rotation du sac de transport (1, 1a, 1b), par rapport à l'élément d'entraînement (44) lors de l'installation de l'élément d'appui (44) sur le patin (54), dans laquelle l'ouverture d'approvisionnement (34) du sac de transport (1, 1a, 1b) se situe parallèle par rapport à la direction de transport (42).

2. Installation de transport selon la revendication 1 **caractérisée en ce**
**que** l'attelage (k) est conçu agissant comme une vis , le sac de transport (1) étant soulevé après une rotation à partir de la première position de rotation dans une deuxième position de rotation.

3. Installation de transport selon les revendications 1 ou 2 **caractérisée en ce**
- **que** chaque élément d'entraînement (44) présente un évidement (46) qui est délimité par un plan s'étendant vers le bas, verticalement et dans la direction de transport (42), par un passage (49) conçu en forme de V comportant des épaulements de passage (50, 51), les épaulements de passage (50, 51) réalisant entre eux un tracé angulaire en M,
- **que** l'emplacement d'accrochage (23) du cadre support (33) est à un sommet de deux épaulements (24, 25) du cadre support (33), sous la forme d'un V mis à l'envers, et parallèles l'un par rapport à l'autre, s'étendant par l'emplacement d'accrochage (23) dans la première position de rotation, et dans un plan incliné d'un angle (Y) par rapport à une ligne gravitationnelle S, qui réalisent entre eux un tracé angulaire en W, et
- **que** les épaulements (24, 25) et le passage (49) entrent en prise l'un dans l'autre.

4. Installation de transport selon l'une des revendications de 1 à 3 **caractérisée en ce**
**que** la face arrière (3) s'étende davantage vers que haut que la face avant (4),
**que** des barres transversales (16, 19, 20) du cadre support (33) sont rapportées sur des bords supérieurs de la face arrière (3) et de la face avant (4), et
**que** la barre transversale (16), attenante à la face avant (4) dans la première position de rotation de l'attelage (K), se situe en dessous de la barre transversale (19, 20) attenante à la face arrière (3).

5. Installation de transport selon la revendication 4 **caractérisée en ce**
**que** l'élément d'appui (29) est relié fixement avec la barre transversale (19, 20) portant la face arrière (3), la barre transversale (16) reliée avec la face avant (4) dans la deuxième position de rotation étant pivotée vers le haut par rapport à la position dans la première position de rotation.

6. Installation de transport selon l'une des revendications de 1 à 4 **caractérisée en ce**
**que** le cadre support (33) est conçu en une pièce unique sous la forme d'une tige ronde avec l'emplacement d'accrochage (23).

7. Installation de transport selon l'une des revendications de 1 à 6 **caractérisée en ce**
**que** les bords (8, 9) de la face avant (4) et de la face arrière (3) sont conçus comme des rabats (14, 11, 12) qui soutiennent les barres transversales (16, 19, 20).

8. Installation de transport selon l'une des revendications de 1 à 7 **caractérisée en ce**
**que** la face avant (4), le fond (2) et la face arrière (3) sont conçus en une seule pièce en tissu ou dans une feuille de matière synthétique.

9. Installation de transport selon l'une des revendications de 1 à 8 **caractérisée en ce**
**que** l'on ait pour le tracé angulaire M : 45 °≤ M ≤ 140 °.

10. Installation de transport selon la revendication 9 **caractérisée en ce**
**que** l'on ait pour le tracé angulaire M : M = 100 °.

11. Installation de transport selon l'une des revendications de 1 à 10 **caractérisée en ce**
**que** l'on ait pour le tracé angulaire Y : 25 °≤ Y ≤ 65 °.

12. Installation de transport selon la revendication 11 **caractérisée en ce**
**que** l'on ait pour le tracé angulaire Y : Y = 45 °.

13. Installation de transport selon l'une des revendications de 1 à 12 **caractérisée en ce**
**que** l'on ait pour le tracé angulaire W : 30 °≤ W ≤ 120 °.

14. Installation de transport selon la revendication 13 **caractérisée en ce**
**que** l'on ait pour le tracé angulaire W : W = 40 °.
